Europäisches Patentamt

European Patent Office

Office européen des brevets

(19)

(11) **EP 0 665 967 B1**

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(51) Int Cl.$^6$: **G05B 19/05**

(21) Anmeldenummer: **93922494.5**

(86) Internationale Anmeldenummer:
**PCT/DE93/00981**

(22) Anmeldetag: **13.10.1993**

(87) Internationale Veröffentlichungsnummer:
**WO 94/09414 (28.04.1994 Gazette 1994/10)**

(54) **PROGRAMMIERGERÄT**

PROGRAMMING MACHINE

APPAREIL DE PROGRAMMATION

(84) Benannte Vertragsstaaten:
**AT BE CH DE DK ES FR GB IT LI LU NL PT SE**

(30) Priorität: **20.10.1992 DE 4235342**

(43) Veröffentlichungstag der Anmeldung:
**09.08.1995 Patentblatt 1995/32**

(73) Patentinhaber: **SIEMENS AKTIENGESELLSCHAFT**
**80333 München (DE)**

(72) Erfinder: **HALLWIRTH, Volker**
**D-78112 St. Georgen (DE)**

(56) Entgegenhaltungen:
**EP-A- 0 166 391        EP-A- 0 200 974**
**DE-A- 3 743 438**

## Beschreibung

Die Erfindung betrifft ein Verfahren zum Programmieren einer speicherprogrammierbaren Zustandssteuerung. Darüber hinaus betrifft die Erfindung ein Programmiergerät für eine speicherprogrammierbare Zustands steuerung.

Aus der DE-OS 37 43 438 ist eine Einrichtung bekannt, die nach Maßgabe eines Momentanzustandes und einer Eingangsvektorbelegung digitaler Prozeßeingangsgrößen einen Übergang in einen Folgezustand und eine Übergabe neuer Steuerdaten an eine Ausgangsstufe bewirkt.

In der älteren deutschen Patentanmeldung P 42 26 456.1 ist eine speicherprogrammierbare Zustandssteuerung beschrieben, die einen Zustandsübergang von einem Momentanzustand in einen Folgezustand für mehrere Prozessoren ermöglicht. Mit dieser Zustandssteuerung bzw. bekannten Einrichtung werden Reaktionszeiten auf Änderungen der Eingangsdaten im Vergleich zu einer gewöhnlichen speicherprogrammierbaren Steuerung wesentlich verkürzt, die während des Steuerbetriebs einzelne Anweisungen des Steuerungsprogramms entsprechend einer Bearbeitung mit einer Von-Neumann-Maschine aus einem Speicher nach und nach ausliest, diese interpretiert und schließlich die entsprechenden Operationen ausführt.

Aus der Druckschrift "Automatisieren mit SIMATIC S5-155U", Hans Berger, 1989, ist ein Programmiergerät bekannt, das zum Umsetzen einer Steuerungsaufgabe in ein Steuerungsprogramm für ein Automatisierungsgerät vorgesehen ist. Alle Funktionen der Steuerungsaufgabe werden programmiert oder mit einer Darstellungsart "Anweisungsliste", "Funktionsplan" oder "Kontaktplan" beschrieben. Das Programmiergerät setzt die programmierten Funktionen unabhängig von den Darstellungsarten in einen entsprechenden Maschinencode um. Dieser Code enthält alle vom Anwender programmierten Steuerungsfunktionen und wird vom Automatisierungsgerät gelesen und interpretiert, nachdem der Code in das Automatisierungsgerät übertragen wurde. Mit diesem bekannten Programmiergerät ist es nur möglich, ein Steuerungsprogramm für eine speicherprogrammierbare Zustandssteuerung mit hohem Programmieraufwand zu erstellen.

Der vorliegenden Erfindung liegt die Aufgabe zugrunde, ein vereinfachtes Verfahren zum Programmieren einer speicherprogrammierbaren Zustandssteuerung anzugeben. Darüber hinaus ist ein Programmiergerät zu schaffen, das eine Programmierung eines Steuerungsprogramms in einer speicherprogrammierbaren Zustands steuerung vereinfacht.

Diese Aufgabe wird im Hinblick auf das Verfahren durch die im Anspruch 1 angegebenen, im Hinblick auf das Programmiergerät durch die im Anspruch 5 angegebenen Maßnahmen gelöst.

Besonders vorteilhaft ist, daß auch ein komplexes Steuerungsprogramm sehr einfach programmiert werden kann. Der Programmierer erstellt ein an sich bekanntes Aktionszeitdiagramm, das Ein- und Ausgangssignale eines zu steuernden technischen Prozesses in Form binärer und/oder analoger Signale beschreibt. Weist das Aktionszeitdiagramm analoge Ein- und Ausgangssignale auf, so muß eine Schwelle zur Kennzeichnung eines Pegelüberganges festgelegt werden. Aus diesem Aktionszeitdiagramm werden die entsprechenden Eingangs-, Steuer- und Zustandscodes des Steuerungsprogramms für die Zustandssteuerung erstellt. Die Kenntnis einer Programmiersprache oder der in der Automatisierungstechnik üblichen Darstellungsarten für eine Steuerungsaufgabe ist nicht erforderlich.

Weitere vorteilhafte Ausgestaltungen der Erfindung ergeben sich aus den Unteransprüchen.

Anhand der Zeichnung, in der ein Ausführungsbeispiel der Erfindung dargestellt ist, werden die Erfindung, deren Ausgestaltungen und Vorteile näher erläutert.

Es zeigen

Figur 1     schematisch eine von einer speicherprogrammierbaren Zustandssteuerung gesteuerte Anlage,

Figur 2     eine Darstellung von in Figur 1 vorkommenden Ein- und Ausgangssignalen in Form eines Aktionszeitdiagramms und

Figur 3     ein Steuerprogramm für die speicherprogrammierbare Zustandssteuerung.

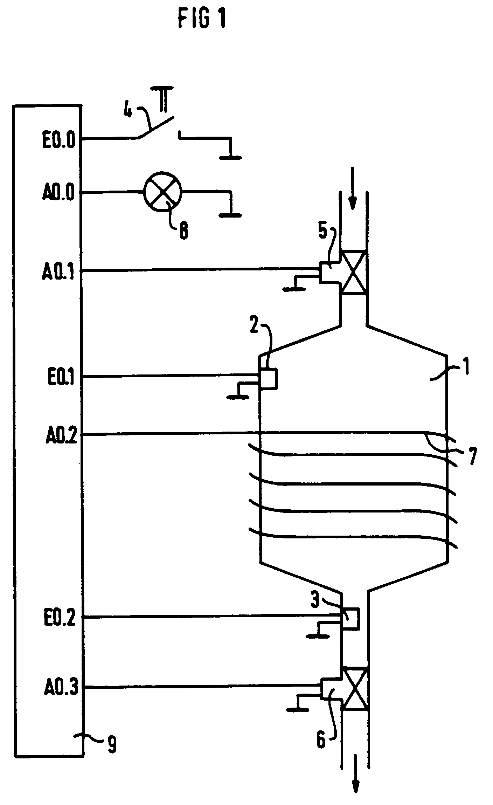

In Figur 1 ist mit 9 eine speicherprogrammierbare Zustandssteuerung bezeichnet, die einen Reaktor 1 aufgrund von Eingangssignalen E0.0, E0.1 und E0.2 steuert. Dabei zeigt das Eingangssignal E0.0 an, daß ein Reaktorzyklus durch einen Taster 4 gestartet ist, und die von Sensoren 2, 3 erzeugten Eingangssignale E0.1, E0.2, daß der Reaktor voll bzw. leer ist. Ein Ausgangssignal A0.0 wird einer Alarmlampe 8 zugeführt und zeigt den Beginn des Reaktorzyklus an. Ausgangssignale A0.1, A0.3 werden Ventilen 5, 6 zum Steuern des Zu- und Ablaufs einer Reaktorflüssigkeit aufgeschaltet und ein Ausgangssignal A0.2 bewirkt das Heizen des Reaktors 1 durch eine Heizung 7.

Eine Steuerungsaufgabe schreibt nun vor, daß ein Reaktorzyklus durch den Taster 4 zu starten und durch die Alarmlampe 8 anzuzeigen ist. 600 Millisekunden nach dem Startvorgang ist das Zulaufventil 5 des leeren Reaktors 1 zu öffnen, das Ablaufventil 6 muß während eines Füllvorgangs geschlossen sein. Weiterhin schreibt die Steuerungsaufgabe vor, daß das Zulaufventil 5 geschlossen werden muß, falls der Reaktor voll ist, und daß der Flüssigkeit im Reaktor 1 fünf Minuten Wärmeenergie über die Heizung 7 zuzuführen ist. Anschließend ist eine Reaktionszeit von drei Minuten vorgesehen, während dieser die Flüssigkeit auf die Wärmezufuhr reagiert. Sind die drei Minuten abgelaufen, ist der Reaktor zu entleeren. Dazu bleibt das Zulaufventil 5 geschlossen und das Ablaufventil 6 wird geöffnet. Wenn der Reaktor 1 leer ist, wird nach einer Erholungszeit von 30 Sekunden die Alarmlampe 8 ausgeschaltet und damit angezeigt, daß der Reaktorzyklus beendet ist und ein neuer Zyklus gestartet werden kann.

Diese derart formulierte Steuerungsaufgabe setzt ein Programmierer mit einem hier nicht dargestellten Programmiergerät in ein Aktionszeitdiagramm um. Das mit einer Anzeigevorrichtung und einem Speicher versehene Programmiergerät weist dazu ein Software-Werkzeug auf, das in dem Speicher hinterlegt ist und auch Anweisungen und Befehle zur graphischen Darstellung des Aktionszeitdiagramms auf der Anzeigevorrichtung beinhaltet.

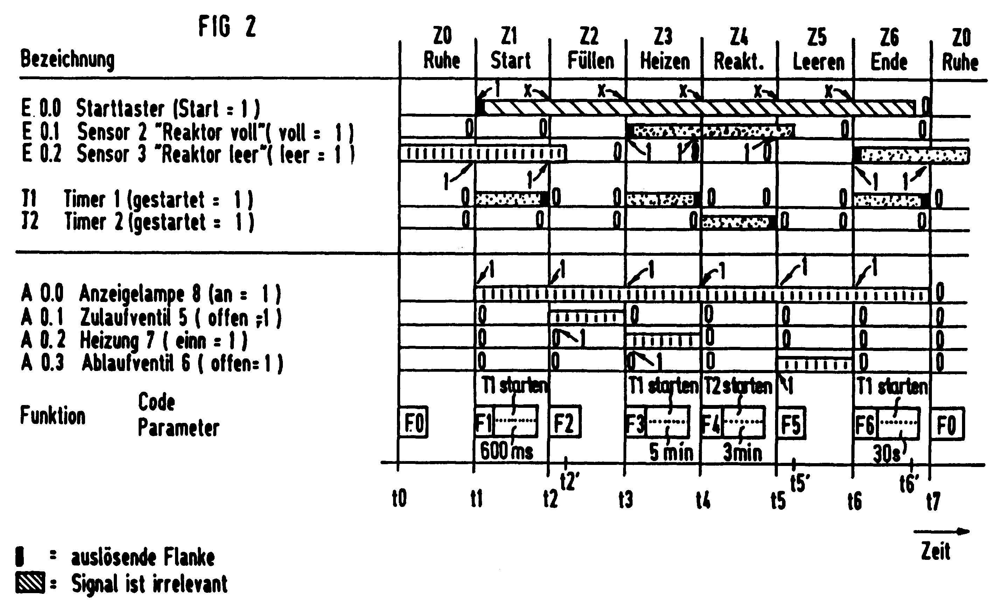

Zur Lösung der formulierten Steuerungsaufgabe wird ein Aktionszeitdiagramm erstellt, das in Figur 2 mit den in Figur 1 vorkommenden Ein- und Ausgangssignalen E0.0 ..., A0.0 ... in binärer Form dargestellt ist. Zusätzlich sind als weitere Ausgangsgrößen Funktionscodes F0 ... F6 dargestellt, die die Dauer von Zuständen Z0 ... Z6 nach Maßgabe von Zeitschaltereinstellungen der Zustandssteuerung 9 wiedergeben. Diese bilden interne binäre Eingangssignale T1, T2, die entsprechend den in der Aufgabe beschriebenen Vorgaben die Heiz- und Reaktionszeit sowie die Verzögerungszeiten im Hinblick auf das Öffnen des Zulaufventils 5 und das Abschalten der Alarmlampe 8 steuern. Die Zustände Z0 ... Z6 bedeuten die Zustände "Ruhe", "Start", "Füllen", "Heizen", "Reaktion", "Leeren" und "Ende". Zum Programmieren eines Steuerprogramms für die speicherprogrammierbare Zustandssteuerung 9 zur Lösung der Steuerungsaufgabe ist es nun erforderlich, das Aktionszeitdiagramm durch das Software-Werkzeug weiterzubearbeiten.

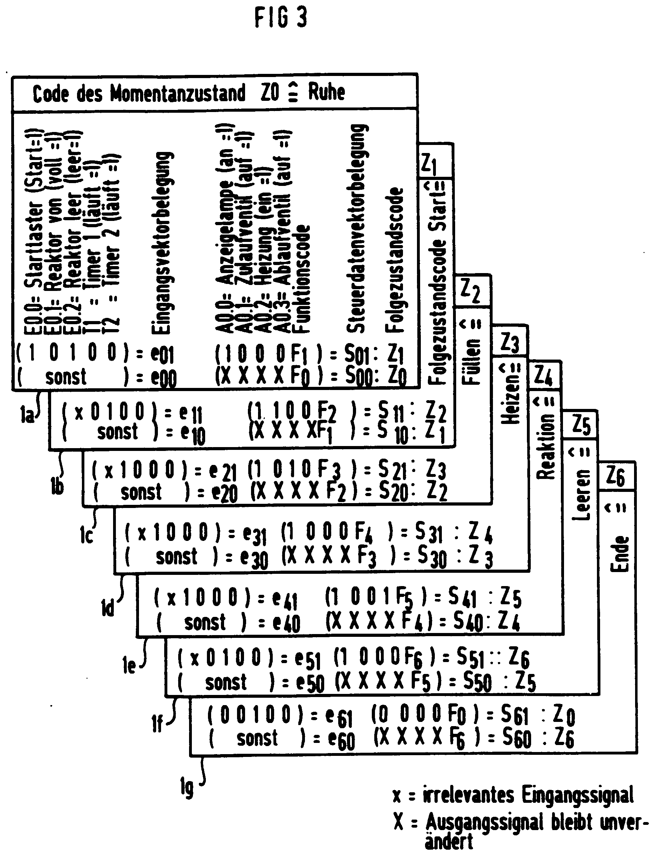

Zur Erläuterung der Art und Weise der Weiterbearbeitung wird zunächst auf Figur 3 verwiesen. Die Figur zeigt ein Steuerprogramm in Form einer ebenfalls auf der Anzeigevorrichtung darstellbaren Steuerungstabelle, die, wie im folgenden noch gezeigt wird, aus dem Aktionszeitdiagramm gemäß Figur 2 erzeugt wird. Die in den Figuren 2 und 3 veranschaulichten gleichen Signale sind mit gleichen Bezugszeichen versehen. Zur besseren Übersicht ist die Steuerungstabelle in Blöcke 1a ... 1g unterteilt, von denen jeder Block einem Zustand Z0 ... Z6 zugeordnet und in entsprechenden Speicherbereichen des Speichers hinterlegt ist. Es bedeuten $e_{ij}$ Eingangsvektorbelegungen, die aus den Binärwerten der Eingangssignale E0.0 ... T1, T2 gebildet werden, und $S_{ij}$ aus den Binärwerten der Ausgangssignale A0.0 ... und den Funktionscodes F0 ... F6 gebildete Steuerdatenvektorbelegungen, wobei i = 0, 1 ... 6; j = 0, 1 ist. Weiterhin bedeutet das Zeichen x, daß der diesem Zeichen zugeordnete Binärwert eines Eingangssignals E0.0 ... irrelevant ist, d. h., unabhängig vom Binärwert dieses Eingangssignals wird der entsprechende Eingangs- und Steuerdatenvektor gebildet. Das Zeichen X in der Steuerdatenvektorbelegung besagt, daß die Binärwerte der Ausgangssignale A0.0 ... bei entsprechenden Eingangsvektorbelegungen unverändert bleiben.

Die Weiterverarbeitung des Aktionszeitdiagramms (Figur 2) zum Erstellen des Steuerungsprogramms durch das Software-Werkzeug wird im folgenden näher erläutert. Die Eingangssignale E0.0 ... T1, T2 werden zu Zeitpunkten größer t0 abgetastet und Pegelübergänge dieser Signale aufgesucht, wobei es keine Beschränkung der Allgemeinheit bedeutet, wenn der Ruhezustand Z0 als Startzustand betrachtet wird. Im dargestellten Beispiel tritt der erste Pegelübergang in den Eingangssignalen E0.0 ... zum Zeitpunkt tl auf, und zwar sind dies die Signale E0.0 und T1. Zum Zeitpunkt tl wird der Starttaster 4 (Figur 1) betätigt, wodurch die interne Zeitschaltung der Zustandssteuerung 9 gestartet wird; denn entsprechend der Vorgaben der Steuerungsaufgabe ist das Zulaufventil 5 erst nach 600 Millisekunden zu öffnen. Dieser Startvorgang wird zum Zeitpunkt tl durch die Alarmlampe 8 angezeigt (A0.0 = 1). Das Starten des Signals T1 ist abhängig vom Betätigen des Tasters 4, wodurch das Eingangssignal E0.0 erzeugt wird. Deshalb ist als auslösende Flanke die Flanke (Pegelübergang) des Eingangssignals E0.0 von Bedeutung. Das Software-Werkzeug sucht den Binärwert (Pegelwert) dieses Signals E0.0 zu einem Zeitpunkt $t1 + \Delta ta$ und die Binärwerte (Pegelwerte) der Eingangssignale E0.1, E0.2, T1 und T2 zu einem Zeitpunkt $t1 - \Delta tb$ auf und bildet aus diesen Werten einen Eingangsvektor

$$e_{01} = (E0.0, E0.1, E0.2, T1, T2) = (10100)$$

(vergleiche Figur 3, Block 1a). Die Zeitspannen $\Delta ta$ und $\Delta tb$ sind so gewählt, daß Binärwerte kurz vor bzw. nach einem Pegelübergang betrachtet werden. Die Zeitspannen $\Delta ta$, $\Delta tb$ können gleich groß gewählt sein, was im folgenden angenommen wird und mit einem Bezugszeichen $\Delta t$ zum Ausdruck kommt. Zum Zeitpunkt $t1 + \Delta t$ wird ein Steuerdatenvektor aus den Binärwerten (Pegelwerten) der Ausgangssignale A0.0 ... und dem Funktionscode F1 der Funktion "Zeitschaltersignal T1 starten" gebildet und ergibt sich zu:

$$S_{01} = (A0.0, A0.1, A0.2, A0.3, F1) = (1000 F1).$$

Der Eingangsvektorbelegung $e_{01}$ im Momentanzustand Z0 ("Ruhe") der Zustandssteuerung 9 ist der Folgezustand Z1 ("Start") zum Zeitpunkt $t1 + \Delta t$ zugeordnet, wodurch diese während der Bearbeitung der Steuerungstabelle beim Auftreten der Eingangsvektorbelegung $e_{01}$ vom Momentanzustand Z0 in den Folgezustand Z1 übergeht und die Steuerdaten entsprechend der Steuerdatenvektorbelegung dem Reaktor 1 aufschaltet. Andere Kombinationen der Eingangssignalpegel bewirken dagegen, daß die Zustandssteuerung 9 im Momentanzustand Z0 bleibt, was in der Steuerungstabelle im Block la durch die Eingangsvektorbelegung $e_{00}$ beschrieben ist, die für alle sonstigen Kombinationen der Eingangssignalpegel E0.0 ..., T1, T2 gültig ist. Für diesen Fall bleiben die dem Reaktor 1 aufgeschalteten

Steuerdaten des Steuerdatenvektors $S_{00}$ unverändert und der dem Momentanzustand Z0 zugeordnete, keine Funktion auslösende Funktionscode F0 bleibt aktiv.

Ein weiterer Pegelübergang tritt im aktuellen Momentanzustand (jetzt Zustand Z1) zu einem Zeitpunkt t2 im Eingangssignal T1 auf. Der Pegel wechselt von "1" zu "0", was darauf hinweist, daß die 600 Millisekunden der Zeitschaltung abgelaufen sind.
Der Binärwert des Signals T1 zu einem Zeitpunkt t2 + $\Delta$t ist 0, die Binärwerte der Ausgangssignale A0.0, ... zu diesem Zeitpunkt sind 1, 1, 0, 0 und die der restlichen Eingangssignale E0.0, E0.1, E0.2 und T2 zu einem Zeitpunkt t2 - $\Delta$t x, 0, 1 und 0, wodurch sich eine Eingangsvektor- und Steuerdatenvektorbelegung unter Berücksichtigung des im vorliegenden Beispiel wiederum keine Funktion auslösenden Funktionscodes F2 ergeben zu:

$$e_{11} = (x0100)$$

und

$$S_{11} = (1100\ F2).$$

Der Eingangsvektorbelegung $e_{11}$ im Momentanzustand Z1 ist der Folgezustand Z2 zugeordnet. Sonstige Eingangssignale E0.0 ... T1, T2 im Momentanzustand Z1 bewirken keinen Zustandswechsel und keine Änderung der Steuerdaten, wodurch die Zustandssteuerung 9 im momentanen Zustand Z1 bleibt.
Entsprechend der bisher beschriebenen Art und Weise wird das Aktionszeitdiagramm durch das Software-Werkzeug zu Zeitpunkten t3, t4, t5, t6 und t7 bearbeitet, zu denen die Eingangssignale E0.1, T1, T2 und E0.2 relevante Pegelübergänge aufweisen. Wie in den Blöcken lc bis lg (Figur 3) dargestellt, ergeben sich Eingangs- und Steuerdatenvektorbelegungen zu:

$$e_{ij},\ S_{ij},\ i = 2 ... 6;\ j = 0, 1,$$

wobei den Eingangsvektoren $e_{il}$ die entsprechenden Folgezustände Z3 ... Z6, Z0 zugeordnet sind.
Der Vollständigkeit halber sei noch auf nichtrelevante Pegelübergänge der Eingangssignale E0.2, E0.1 und E0.0 zu Zeitpunkten t2', t5' und t6' hingewiesen. Zu den Zeitpunkten t2' und t5' ergibt sich entsprechend den bisher beschriebenen Bearbeitungsschritten eine Eingangssignalkombination von E0.1 = 0 (Reaktor nicht leer) und E0.2 = 0 (Reaktor nicht voll). Diese bezüglich der Füllvorgänge nicht eindeutige Kombination wird durch das Software-Werkzeug erkannt, wodurch diese Pegelübergänge für eine weitere Auswertung unberücksichtigt bleiben. Zu dem Zeitpunkt t6' ergibt sich eine Eingangskombination E0.0 = 0 und T1 = 1, was darauf hinweist, daß von diesem Zustandsende nicht in den Ruhezustand Z0 gewechselt werden kann, da die eingestellte Zeit von 30 Sekunden der Zeitschaltung noch nicht abgelaufen ist. Damit nichtrelevante Pegelübergänge nicht durch eine entsprechende Auswertung durch das Software-Werkzeug bearbeitet werden müssen, sind vorteilhaft die relevanten Pegelübergänge markiert, was in Figur 2 durch auslösende Flanken markierte Pegelübergänge (mit schwarzen Balken in den Eingangssignalen eingezeichnet) gekennzeichnet ist.

Die in Figur 3 dargestellte Steuerungstabelle wird in die speicherprogrammierbare Zustandssteuerung übertragen, die entsprechend den Vorgaben dieser Tabelle die Steuerungsaufgabe entsprechend der älteren deutschen Patentanmeldung P 42 26 456.1 und der DE-OS 37 43 438 löst. Die Übertragung kann dadurch bewirkt werden, daß die Steuerungstabelle aus dem Speicher des Programmiergeräts ausgelesen, auf eine Diskette oder Speichermodul geschrieben und von dort in den Anwenderspeicher der Zustandssteuerung übertragen wird. Die Übertragung kann selbstverständlich auch online über eine entsprechende Verbindung des Programmiergeräts mit der Zustandssteuerung erfolgen. Das Software-Werkzeug ist vorteilhaft so ausgebildet, daß auch aus einer vorgegebenen Steuerungstabelle das zugehörige Aktionszeitdiagramm erzeugt werden kann, da alle Informationen des Aktionszeitdiagramms umkehrbar eindeutig in der Steuerungstabelle abgebildet werden.

Im dargestellten Ausführungsbeispiel erstellt der Programmierer das Aktionszeitdiagramm mit dem Programmiergerät. Es ist selbstverständlich möglich, reale Ein- und Ausgangssignale als Meßgrößen eines bereits laufenden Prozesses aufzuzeichnen und in einem Aktionszeitdiagramm darzustellen. In diesem Fall müssen bei der Wahl der Zeitspannen $\Delta$ta, $\Delta$tb und $\Delta$t Einschwingvorgänge berücksichtigt werden.

**Patentansprüche**

1. Verfahren zum Programmieren einer speicherprogrammierbaren Zustandssteuerung (9) mit einem Programmiergerät, das einen Speicher aufweist, in dem eine mit einem Software-Werkzeug erstellte Steuerungsaufgabe in Form eines auf einer Anzeigevorrichtung darstellbaren Aktionszeitdiagramms hinterlegt ist, das Ein- und Ausgangssignale (E0.0 ..., A0.0 ...) eines zu steuernden technischen Prozesses in Form binärer und/oder analoger Signale beschreibt und durch das Software-Werkzeug zur Erstellung eines Steuer- und Zustandscodes aufweisenden Steuerprogramms zur Lösung der Steuerungsaufgabe, ausgehend von einem Momentanzustand (Z0, Z1 ...), nach folgenden Schritten weiterverarbeitet wird:

- Aufsuchen von Zeitpunkten ti (i = 0, 1 ...), zu denen Pegelübergänge der Eingangssignale (E0.0 ...) auftreten,

- Aufsuchen des Pegelwertes des den jeweils ermittelten Pegelübergang aufweisenden Eingangssignals (E0.0) zu einem Zeitpunkt ti + $\Delta$ta, wobei $\Delta$ta eine erste vorgebbare Zeitspanne ist,
- Aufsuchen der Pegelwerte der restlichen Eingangssignale (E0.1 ...) zu einem Zeitpunkt ti - $\Delta$tb, wobei $\Delta$tb eine zweite vorgebbare Zeitspanne ist,
- Aufsuchen der Pegelwerte der Ausgangssignale (A0.0 ...) zum Zeitpunkt ti + $\Delta$ta,
- Erstellen eines Eingangsvektors ($e_{00}$, $e_{01}$ ...) aus den aufgesuchten Pegelwerten der Eingangssignale (E0.0 ...),
- Erstellen eines Steuerdatenvektors ($S_{00}$, $S_{01}$ ...) aus den aufgesuchten Pegelwerten der Ausgangssignale (A0.0 ...),
- Zuordnung des Eingangsvektors ($e_{00}$, $e_{01}$ ...) zu einem Folgezustand (Z0, Z1 ...) zum Zeitpunkt ti + $\Delta$ta.

2. Verfahren nach Anspruch 1, **dadurch gekennzeichnet**,

   - daß die Zeitspannen ($\Delta$ta, $\Delta$tb) gleich sind.

3. Verfahren nach Anspruch 1 oder 2, **dadurch gekennzeichnet**,

   - daß relevante Pegelübergänge im Aktionszeitdiagramm markiert sind.

4. Verfahren nach einem der Ansprüche 1 bis 3, **dadurch gekennzeichnet**,

   - daß das Steuerprogramm in das Aktionszeitdiagramm rückführbar ist.

5. Programmiergerät für eine speicherprogrammierbare Zustandssteuerung (9) mit einem Speicher, in dem eine mit einem Software-Werkzeug erstellte Steuerungsaufgabe in Form eines auf einer Anzeigevorrichtung darstellbaren Aktionszeitdiagramms hinterlegt ist, das Ein- und Ausgangssignale (E0.0 ..., A0.0 ...) eines zu steuernden technischen Prozesses in Form binärer und/oder analoger Signale beschreibt und zur Erstellung eines Steuer- und Zustandscodes aufweisenden Steuerprogramms zur Lösung der Steuerungsaufgabe vorgesehen ist, wobei ausgehend von einem Momentanzustand (Z0, Z1 ...) das Software-Werkzeug Mittel aufweist zur Weiterbearbeitung des Aktionszeitdiagramms nach folgenden Schritten:

   - Aufsuchen von Zeitpunkten ti (i = 0, 1 ...), zu denen Pegelübergänge der Eingangssignale (E0.0 ...) auftreten,
   - Aufsuchen des Pegelwertes des den jeweils ermittelten Pegelübergang aufweisenden Eingangssignals (E0.0) zu einem Zeitpunkt ti + $\Delta$ta, wobei $\Delta$ta eine erste vorgebbare Zeitspanne ist,
- Aufsuchen der Pegelwerte der restlichen Eingangssignale (E0.1 ...) zu einem Zeitpunkt ti - $\Delta$tb, wobei $\Delta$tb eine zweite vorgebbare Zeitspanne ist,
- Aufsuchen der Pegelwerte der Ausgangssignale (A0.0 ...) zum Zeitpunkt ti + $\Delta$ta,
- Erstellen eines Eingangsvektors ($e_{00}$, $e_{01}$ ...) aus den aufgesuchten Pegelwerten der Eingangssignale (E0.0 ...),
- Erstellen eines Steuerdatenvektors ($S_{00}$, $S_{01}$ ...) aus den aufgesuchten Pegelwerten der Ausgangssignale (A0.0 ...),
- Zuordnung des Eingangsvektors ($e_{00}$, $e_{01}$ ...) zu einem Folgezustand (Z0, Z1 ...) zum Zeitpunkt ti + $\Delta$ta.

6. Programmiergerät nach Anspruch 5, **dadurch gekennzeichnet**,

   - daß die Mittel die Zeitspannen ($\Delta$ta, $\Delta$tb) gleich wählen.

7. Programmiergerät nach Anspruch 5 oder 6, **dadurch gekennzeichnet**,

   - daß die Mittel relevante Pegelübergänge im Aktionszeitdiagramm markieren.

8. Programmiergerät nach einem der Ansprüche 5 bis 7, **dadurch gekennzeichnet**,

   - daß das Steuerprogramm in das Aktionszeitdiagramm rückführbar ist.

**Claims**

1. Method for programming a programmable state-control (9) with a programming unit which has a memory in which a control task, which is created with a software tool, is stored in the form of an action-time diagram which can be displayed on a display arrangement, describes input and output signals (E0.0 ..., A0.0 ...) of a technical process, which is to be controlled, in the form of binary and/or analog signals and is processed further by means of the software tool for the purpose of creating a control program having control codes and state codes for the purpose of carrying out the control task, starting from an instantaneous state (Z0, Z1 ...), in accordance with the following steps:

   - searching for instants ti (i = 0, 1 ...) at which level transitions of the input signals (E0.0 ...) occur,

- searching for the level value of the input signal (E0.0), which has the level transition respectively determined, at an instant ti + $\Delta$ta, where $\Delta$ta is a first preselectable time span,
- searching for the level values of the remaining input signals (E0.1 ...) at an instant ti - $\Delta$tb, where $\Delta$tb is a second preselectable time span,
- searching for the level values of the output signals (A0.0 ...) at the instant ti + $\Delta$ta,
- creating an input vector ($e_{00}$, $e_{01}$ ...) from the level values of the input signals (E0.0 ...) that have been found,
- creating a control data vector ($S_{00}$, $S_{01}$ ...) from the level values of the output signals (A0.0 ...) that have been found,
- association of the input vector ($e_{00}$, $e_{01}$ ...) with a follow-on state (Z0, Z1 ...) at the instant ti + $\Delta$ta.

2. Method according to claim 1, characterised

- in that the time spans ($\Delta$ta, $\Delta$tb) are identical.

3. Method according to claim 1 or 2, characterised

- in that relevant level transitions are marked in the action-time diagram.

4. Method according to one of the claims 1 to 3, characterised

- in that the control program can be fed back into the action-time diagram.

5. Programming unit for a programmable state-control (9) having a memory in which a control task, which is created with a software tool, is stored in the form of an action-time diagram which can be displayed on a display arrangement, describes input and output signals (E0.0 ..., A0.0 ...) of a technical process, which is to be controlled, in the form of binary and/or analog signals and is provided for the purpose of creating a control program having control codes and state codes for the purpose of carrying out the control task, wherein, starting from an instantaneous state (Z0, Z1 ...), the software tool has means for processing the action-time diagram further in accordance with the following steps:

- searching for instants ti (i = 0, 1 ...) at which level transitions of the input signals (E0.0 ...) occur,
- searching for the level value of the input signal (E0.0), which has the level transition respectively determined, at an instant ti + $\Delta$ta, where $\Delta$ta is a first preselectable time span,
- searching for the level values of the remaining input signals (E0.1 ...) at an instant ti - $\Delta$tb, where $\Delta$tb is a second preselectable time span,
- searching for the level values of the output signals (A0.0 ...) at the instant ti + $\Delta$ta,
- creating an input vector ($e_{00}$, $e_{01}$ ...) from the level values of the input signals (E0.0 ...) that have been found,
- creating a control data vector ($S_{00}$, $S_{01}$ ...) from the level values of the output signals (A0.0 ...) that have been found,
- association of the input vector ($e_{00}$, $e_{01}$ ...) with a follow-on state (Z0, Z1 ...) at the instant ti + $\Delta$ta.

6. Programming unit according to claim 5, characterised

- in that the means select the time spans ($\Delta$ta, $\Delta$tb) so that they (the time spans) are identical.

7. Programming unit according to claim 5 or 6, characterised

- in that the means mark relevant level transitions in the action-time diagram.

8. Programming unit according to one of the claims 5 to 7, characterised

- in that the control program can be fed back into the action-time diagram.

**Revendications**

1. Procédé pour programmer une commande d'état (9) programmable en mémoire par un appareil de programmation, qui comporte une mémoire dans laquelle une tâche de commande établie par un outil logiciel est mémorisée sous la forme d'un diagramme temporel d'actions, qui peut être représenté sur un dispositif d'affichage, qui décrit des signaux d'entrée et de sortie (E0.0 ..., A0.0 ...) d'un processus technique à commander sous forme de signaux binaires et/ou analogiques et qui est retraité par l'outil logiciel pour établir un programme de commande comportant un code de commande et d'état afin d'accomplir la tâche de commande, à partir d'un état présent (Z0, Z1 ...), selon les étapes suivantes :

- recherche d'instants ti (i = 0, 1 ...) auxquels des transitions de niveaux des signaux d'entrée (E0.0 ...) apparaissent,
- recherche de la valeur de niveau du signal d'entrée (E0.0), présentant la transition de niveau justement détectée, à un instant ti + $\Delta$ta, $\Delta$ta étant un premier intervalle de temps pouvant être prescrit,

- recherche des valeurs de niveaux des autres signaux d'entrée (E0.1 ...) à un instant ti - Δtb, Δtb étant un second intervalle de temps pouvant être prescrit,
- recherche des valeurs de niveaux des signaux de sortie (A0.0 ...) à l'instant ti + Δta,
- établissement d'un vecteur d'entrée (e$_{00}$, e$_{01}$ ...) à partir des valeurs de niveaux recherchées des signaux d'entrée (E0.0 ...),
- établissement d'un vecteur de données de commande (S$_{00}$, S$_{01}$ ...) à partir des valeurs de niveaux recherchées des signaux de sortie (A0.0 ...),
- association du vecteur d'entrée (e$_{00}$, e$_{01}$ ...) à un état suivant (Z0, Z1 ...) à l'instant ti + Δta.

2. Procédé selon la revendication 1, caractérisé par le fait que les intervalles de temps (Δta, Δtb) sont égaux.

3. Procédé selon la revendication 1 ou 2, caractérisé par le fait que des transitions de niveaux significatives sont repérées dans le diagramme temporel d'actions.

4. Procédé selon l'une des revendications 1 à 3, caractérisé par le fait que le programme de commande peut être reconverti en le diagramme temporel d'actions.

5. Appareil de programmation destiné à une commande d'état (9) programmable en mémoire, comportant une mémoire dans laquelle une tâche de commande établie par un outil logiciel est mémorisée sous la forme d'un diagramme temporel d'actions, qui peut être représenté sur un dispositif d'affichage, qui décrit des signaux d'entrée et de sortie (E0.0 ..., A0.0 ...) d'un processus technique à commander sous forme de signaux binaires et/ou analogiques et qui est prévu pour établir un programme de commande comportant un code de commande et d'état, afin d'accomplir la tâche de commande, sachant que, à partir d'un état présent (Z0, Z1 ...), l'outil logiciel comporte des moyens pour le retraitement du diagramme temporel d'actions selon les étapes suivantes :

- recherche d'instants ti (i = 0, 1 ...) auxquels des transitions de niveaux des signaux d'entrée (E0.0 ...) apparaissent,
- recherche de la valeur de niveau du signal d'entrée (E0.0), présentant la transition de niveau détectée, à un instant ti + Δta, Δta étant un premier intervalle de temps pouvant être prescrit,
- recherche des valeurs de niveaux des autres signaux d'entrée (E0.1 ...) à un instant ti - Δtb, Δtb étant un second intervalle de temps pouvant être prescrit,

- recherche des valeurs de niveaux des signaux de sortie (A0.0 ...) à l'instant ti + Δta,
- établissement d'un vecteur d'entrée (e$_{00}$, e$_{01}$ ...) à partir des valeurs de niveaux recherchées des signaux d'entrée (E0.0 ...),
- établissement d'un vecteur de données de commande (S$_{00}$, S$_{01}$ ...) à partir des valeurs de niveaux recherchées des signaux de sortie (A0.0 ...),
- association du vecteur d'entrée (e$_{00}$, e$_{01}$ ...) à un état suivant (Z0, Z1 ...) à l'instant ti + Δta.

6. Appareil de programmation selon la revendication 5, caractérisé par le fait que les moyens choisissent les intervalles de temps (Δta, Δtb) égaux.

7. Appareil de programmation selon la revendication 5 ou 6, caractérisé par le fait que les moyens repèrent des transitions de niveaux significatives dans le diagramme temporel d'actions.

8. Appareil de programmation selon l'une des revendications 5 à 7, caractérisé par le fait que le programme de commande peut être reconverti en le diagramme temporel d'actions.

# FIG 1

EP 0 665 967 B1

**FIG 2**

| | Z0 Ruhe | Z1 Start | Z2 Füllen | Z3 Heizen | Z4 Reakt. | Z5 Leeren | Z6 Ende | Z0 Ruhe |
|---|---|---|---|---|---|---|---|---|

Bezeichnung

E.0.0 Starttaster (Start = 1)
E 0.1 Sensor 2 "Reaktor voll"( voll = 1)
E 0.2 Sensor 3 "Reaktor leer"( leer = 1)

T1 Timer 1 (gestartet = 1)
T2 Timer 2 (gestartet = 1)

A 0.0 Anzeigelampe 8 (an = 1)
A 0.1 Zulaufventil 5 ( offen =1)
A 0.2 Heizung 7 ( einn = 1)
A 0.3 Ablaufventil 6 ( offen= 1)

Funktion    Code Parameter

T1 starten    T1 starten    T2 starten    T1 starten
F0    F1 — 600 ms    F2    F3 — 5 min    F4 — 3min    F5    F6 — 30s    F0

t0    t1    t2  t2'    t3    t4    t5  t5'    t6  t6'    t7

Zeit

■ = auslösende Flanke
▨ = Signal ist irrelevant

## FIG 3

**Code des Momentanzustand $Z0 \,\hat{=}\,$ Ruhe**

Eingangsvektorbelegung:
- E0.0= Starttaster (Start:=1)
- E0.1= Reaktor von (voll :=1)
- E0.2= Reaktor leer (leer:=1)
- T1 = Timer 1 (läuft :=1)
- T2 = Timer 2 (läuft :=1)

Steuerdatenvektorbelegung:
- A0.0= Anzeigelampe (an :=1)
- A0.1= Zulaufventil (auf :=1)
- A0.2= Heizung (ein :=1)
- A0.3= Ablaufventil (auf :=1)
- Funktionscode

Folgezustandscode:
- $Z_1$: Folgezustandscode Start $\hat{=}$
- $Z_2$: Füllen $\hat{=}$
- $Z_3$: Heizen $\hat{=}$
- $Z_4$: Reaktion $\hat{=}$
- $Z_5$: Leeren $\hat{=}$
- $Z_6$: Ende $\hat{=}$

| Eingangsvektorbelegung | Steuerdatenvektorbelegung / Folgezustandscode |
|---|---|
| $(1\ 0\ 1\ 0\ 0) = e_{01}$ | $(1\ 0\ 0\ 0\ F_1\ ) = S_{01}: Z_1$ |
| $(\ \text{sonst}\ ) = e_{00}$ | $(X\ X\ X\ X\ F_0\ ) = S_{00}: Z_0$ |

1a:
| | |
|---|---|
| $(x\ 0\ 1\ 0\ 0) = e_{11}$ | $(1\ 1\ 0\ 0\ F_2\ ) = S_{11}: Z_2$ |
| $(\ \text{sonst}\ ) = e_{10}$ | $(X\ X\ X\ X\ F_1) = S_{10}: Z_1$ |

1b:
| | |
|---|---|
| $(x\ 1\ 0\ 0\ 0) = e_{21}$ | $(1\ 0\ 1\ 0\ F_3\ ) = S_{21}: Z_3$ |
| $(\ \text{sonst}\ ) = e_{20}$ | $(X\ X\ X\ X\ F_2) = S_{20}: Z_2$ |

1c:
| | |
|---|---|
| $(x\ 1\ 0\ 0\ 0) = e_{31}$ | $(1\ 0\ 0\ 0\ F_4\ ) = S_{31}: Z_4$ |
| $(\ \text{sonst}\ ) = e_{30}$ | $(X\ X\ X\ X\ F_3\ ) = S_{30}: Z_3$ |

1d:
| | |
|---|---|
| $(x\ 1\ 0\ 0\ 0) = e_{41}$ | $(1\ 0\ 0\ 1\ F_5\ ) = S_{41}: Z_5$ |
| $(\ \text{sonst}\ ) = e_{40}$ | $(X\ X\ X\ X\ F_4) = S_{40}: Z_4$ |

1e:
| | |
|---|---|
| $(x\ 0\ 1\ 0\ 0) = e_{51}$ | $(1\ 0\ 0\ 0\ F_6\ ) = S_{51}: Z_6$ |
| $(\ \text{sonst}\ ) = e_{50}$ | $(X\ X\ X\ X\ F_5\ ) = S_{50}: Z_5$ |

1f:
| | |
|---|---|
| $(0\ 0\ 1\ 0\ 0) = e_{61}$ | $(0\ 0\ 0\ 0\ F_0\ ) = S_{61}: Z_0$ |
| $(\ \text{sonst}\ ) = e_{60}$ | $(X\ X\ X\ X\ F_6\ ) = S_{60}: Z_6$ |

1g

x = irrelevantes Eingangssignal  
X = Ausgangssignal bleibt unver-ändert